# FASCICULE DE BREVET EUROPEEN

(11) **EP 3 117 517 B1**
(45) Date de publication et mention de la délivrance du brevet: **26.02.2020**
(21) Numéro de dépôt: 15717541.5
(22) Date de dépôt: 10.03.2015
(51) Int. Cl.: H02S 20/23, H02S 20/25

(54) **PLAQUE PERFECTIONNÉE POUR L'INSTALLATION DE PANNEAUX PHOTOVOLTAÏQUES**
VERBESSERTE PLATTE ZUR INSTALLATION VON PHOTOVOLTAIKTAFELN
IMPROVED PLATE FOR INSTALLING PHOTOVOLTAIC PANELS

(30) Priorité: 10.03.2014 FR 1451949
(43) Date de publication de la demande: 18.01.2017
(73) Titulaire: SNC Yap, 92200 Neuilly sur Seine (FR)
(72) Inventeur: SABBAN, Ylan Gilles, 93400 Saint-Ouen (FR)
(74) Mandataire: Loyer & Abello
(86) Numéro de dépôt international: PCT/FR2015/050595
(87) Numéro de publication internationale: WO 2015/136215

(56) Documents cités:
- EP-A1- 2 541 162
- DE-A1-102011 104 303
- JP-A- H10 169 131
- US-A- 4 204 523

## Description

L'invention concerne une plaque perfectionnée pour l'installation de panneaux photovoltaïques, permettant une installation étanche, simple et rapide.

L'installation et la fixation des panneaux photovoltaïques sont traditionnellement effectuées à l'aide de systèmes de rails métalliques qui pèsent lourds et nécessitent des moyens de transport adaptés.

De plus, les systèmes traditionnels sont souvent exposés au risque d'infiltration d'eau.

On connaît un dispositif d'installation de panneaux photovoltaïques décrit et représenté dans le document EP-A-2541162, qui comporte une plaque thermoformée favorisant l'installation des panneaux photovoltaïques.

Cette plaque de support est adaptée pour s'emboîter dans un panneau photovoltaïque et permettre la fixation et l'intégration de ce panneau sur une toiture de bâtiment. La plaque comprend des moyens de chevauchement verticaux étanches, des moyens d'emboîtement latéraux étanches, des points de fixation de la plaque, et un espace vide pour le passage des câbles et l'accès à la charpente de la toiture.

Bien que ce type de plaque permette une installation aisée d'un panneau photovoltaïques, son étanchéité peut être améliorée.

Dans ce but, la présente invention se rapporte à une plaque de support adaptée pour s'emboîter dans un panneau photovoltaïque et permettre la fixation et l'intégration de ce panneau sur une toiture de bâtiment, comprenant :
- des moyens de chevauchement verticaux étanches,
- des moyens d'emboîtement latéraux étanches,
- des plots de support de la plaque qui sont surélevés,
- un espace vide pour le passage des câbles et l'accès à la charpente de la toiture,
caractérisée en ce qu'elle comprend au moins l'une des caractéristiques choisies dans le groupe comprenant :
- une pluralité de rails de guidage qui sont agencés en amont de l'espace vide suivant le sens d'écoulement de l'eau en provenance du faîtage de la toiture, et qui sont agencés globalement en V inversé pour dévier l'écoulement de l'eau sur les côtés latéraux de l'espace vide,
- au moins un renfort qui est interposé entre les moyens d'emboîtement latéraux et la toiture et qui est conçu pour empêcher l'écrasement desdits moyens d'emboîtement,
- au moins une zone de perçage qui est agencée au voisinage de chaque plot de support et qui est surélevée de façon à éviter la pénétration d'eau,
- une graduation qui est conçue pour ajuster le chevauchement vertical entre deux plaques juxtaposées.

Ces différentes caractéristiques participent chacune à améliorer l'étanchéité de la plaque de support.

De préférence, chaque rail de guidage forme un bourrelet pour dévier l'écoulement de l'eau sur les côtés latéraux de l'espace vide.

Aussi, les moyens d'emboîtement présentent une section en creux globalement en U inversé, et le renfort est une pièce rapportée qui est agencée dans le creux délimité par les moyens d'emboîtement.

Le renfort permet de s'opposer aux efforts d'écrasement exercé sur les moyens d'emboîtement pour préserver l'étanchéité de la plaque.

De plus, la plaque comprend un bourrelet disposé de façon à éviter l'écoulement de l'eau en provenance du faîtage de la toiture dans l'espace vide.

Une rainure est formée dans ledit bourrelet, permettant le passage de câbles entre la plaque et le panneau photovoltaïque.

Selon un exemple de réalisation préféré, chaque zone de perçage est moins surélevée que le plot de support associé pour permettre l'agencement de moyens de fixation.

Aussi, la plaque de support comprend des moyens de rehaussement et de ventilation dudit panneau photovoltaïque, et des cales permettant de chasser l'eau en provenance du faîtage de ladite toiture.

L'invention concerne aussi un ensemble formé par un panneau photovoltaïque et une plaque conforme à ce qui précède emboîtée dans ce panneau photovoltaïque.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus qui illustre la plaque de support selon l'invention au format portrait ;
- la figure 2 est une vue en perspective qui illustre la plaque de support de la figure 1 ;
- la figure 3 est une vue de côté qui illustre les moyens d'emboîtement latéraux étanches de la plaque de support ;
- la figure 4 est une vue de détail en coupe transversale, qui illustre un renfort des moyes d'emboîtement latéraux.

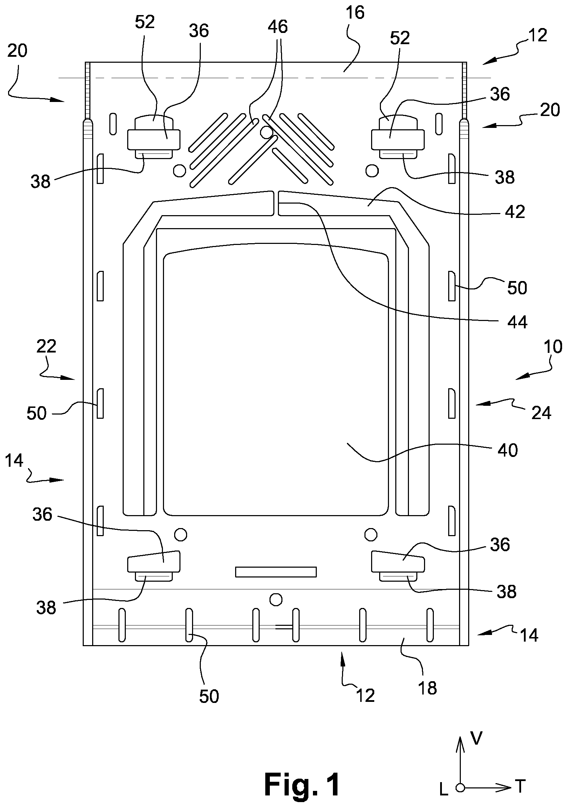

Dans la description et les revendications, on utilisera à titre non limitatif les expressions « supérieur », « inférieur » et leur dérivés en référence à la partie supérieure et à la partie inférieure respectivement de la figure 1.

De plus, pour clarifier la description et les revendications, on adoptera à titre non limitatif la terminologie longitudinal, vertical et transversal en référence au trièdre L, V, T indiqué aux figures, l'axe vertical V étant considéré ici parallèle à la pente de la toiture, sans référence à la gravité terrestre.

Sur l'ensemble de ces figures, des références identiques ou analogues représentent des organes ou ensembles d'organes identiques ou analogues.

A noter que dans la présente demande de brevet, les termes « amont » et «aval » doivent s'entendre par rapport à la pente de la toiture sur laquelle la plaque est destinée à être montée et au sens de l'écoulement de l'eau de ruissèlement.

On a représenté à la figure 1 une plaque 10 de support adaptée pour s'emboîter dans un panneau photovoltaïque (non représenté) et permettre la fixation et l'intégration de ce panneau sur une toiture de bâtiment.

La plaque 10 comporte des moyens de chevauchement 12 verticaux étanches et des moyens d'emboîtement 14 latéraux étanches.

Les moyens de chevauchement 12 verticaux sont formés par une bande supérieure 16 transversale et par une bande inférieure 18 transversale qui sont adaptées pour permettre le chevauchement d'une plaque de support supérieure et d'une plaque de support inférieures juxtaposées verticalement.

Selon cette configuration, la bande inférieure 18 de la plaque 10 supérieure recouvre la bande supérieure 16 de la plaque 10 inférieur de façon à assurer une étanchéité parfaite.

Dans ce but, les moyens de chevauchement sont pourvus d'une graduation 20 qui est conçue pour ajuster le chevauchement vertical et le recouvrement entre deux plaques juxtaposées.

A cet effet, la graduation représente une échelle de mesure graduée par exemple, qui est gravée, imprimée ou moulée sur la bande supérieure 16 de la plaque 10 de support.

Ainsi, la graduation 20 permet de mesurer le chevauchement de deux plaques 10 de support et de garantir un recouvrement minimum et une bonne étanchéité.

De plus, la graduation 20 permet de régler le chevauchement de deux plaques 10 de support juxtaposées en fonction de la dimension du panneau photovoltaïque à installer, de sorte que les plaques de support peuvent s'adapter à différents formats de panneaux photovoltaïques.

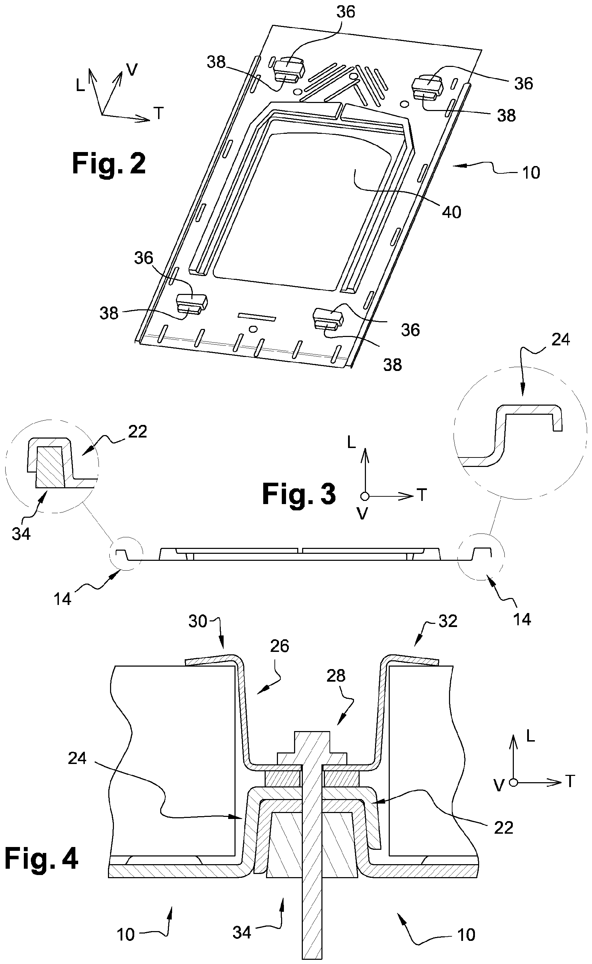

Comme on peut le voir à la figure 3, les moyens d'emboîtement 14 latéraux comprennent un premier profilé 22 et un second profilé 24 qui s'étendent chacun verticalement sur les côtés de la plaque 10 et qui présentent chacun une section en creux globalement en U inversé.

Le premier profilé 22 présente une forme adaptée pour être emboîtée dans le creux formé par le second profilé 24, lorsque deux plaques 10 de support voisines sont juxtaposées transversalement, pour assurer une bonne étanchéité entre les plaques.

Selon la figure 4, un cavalier 26 est fixé sur les profilés 22, 24 au moyen d'une vis 28.

La cavalier 26 comporte une première patte 30 de retenue qui est adaptée pour coopérer avec un panneau photovoltaïque porté par une première plaque 10, et une second patte 32 de retenue qui est adaptée pour coopérer avec un panneau photovoltaïque porté par une seconde plaque 10.

En cas de pression exercée sur les panneaux photovoltaïques, pression due au vent par exemple, les panneaux peuvent transmettre un effort de compression avec une composante verticale sur les moyens d'emboîtement 14.

Pour empêcher l'écrasement des moyens d'emboîtement 14, la plaque 10 de support est équipée d'un renfort 34 qui est interposé entre les moyens d'emboîtement 14 latéraux et la toiture.

Un écrasement des moyens d'emboîtement 14 est à éviter car il risquerait d'ouvrir un passage d'infiltration d'eau, par exemple par déformation du trou de passage de la vis 28, ou par un soulèvement du second profilé 24.

Le renfort 34 est une pièce rapportée qui est agencée dans le creux délimité par le premier profilé 22 des moyens d'emboîtement 14 pour s'opposer à l'écrasement des moyens d'emboîtement 14.

A titre non limitatif, le renfort 34 peut aussi être intégré et formé par le premier profilé 22, par exemple au cours du moulage du premier profilé 22.

Selon un autre aspect, en référence aux figures 1 et 2, la plaque 10 de support comporte des plots de support 36 du panneau photovoltaïque qui sont rehaussés pour surélever le panneau photovoltaïque.

Les plots de support 36 permettent le positionnement, le guidage, le calage du panneau photovoltaïque et le support des pieds des poseurs de panneaux.

De plus, chaque plot de support 36 est associé à une zone de perçage 38 qui est agencée en aval des plots de support 36 pour être protégée de l'écoulement d'eau et qui est surélevée de façon à éviter la pénétration d'eau.

On entend par zone de perçage 38 une zone qui est conçue pour permettre le perçage et le passage de moyens de fixation. La zone de perçage 38 peut comporter une empreinte ou une marque indiquant un emplacement de perçage, et/ou une zone pré-affaiblie mécaniquement pour favoriser le perçage par exemple.

Comme on peut le voir sur la figure 2, chaque zone de perçage 38 est moins surélevée que le plot de support 36 associé pour permettre l'agencement de moyens de fixation, comme des vis (non représentées), sans que ces moyens de fixation ne dépassent le plot de support 36 associé pour ne pas gêner la mise en place du panneau photovoltaïque.

Aussi, la plaque 10 de support délimite un espace vide 40 pour le passage des câbles et l'accès à la charpente de la toiture.

L'espace vide 40 est surmonté d'un bourrelet 42 qui est disposé de façon à éviter l'écoulement de l'eau en provenance du faîtage de la toiture dans l'espace vide 40.

Une rainure 44 est formée dans le bourrelet 42, permettant le passage de câbles entre la plaque 10 et le panneau photovoltaïque.

Comme on peut le voir à la figure 1, la plaque 10 comprend une pluralité de rails 46 de guidage qui sont agencés en amont de l'espace vide 40 suivant le sens d'écoulement de l'eau en provenance du faîtage de la toiture, et qui sont agencés globalement en V inversé pour dévier l'écoulement de l'eau sur les côtés latéraux de l'espace vide 40.

Chaque rail 46 de guidage forme un bourrelet rehaussé pour dévier l'écoulement de l'eau sur les côtés latéraux de l'espace vide 40.

Aussi, la plaque 10 comprend des moyens de rehaussement 50 du panneau photovoltaïque qui permettent de ventiler le panneau photovoltaïque.

Enfin, la plaque 10 est équipée de cales 52 qui sont agencées en amont des plots de support 36, et qui permettent de chasser l'eau en provenance du faîtage de la toiture.

De plus, les cales 52 sont conçues pour supporter le panneau photovoltaïque.

La plaque 10 est formée d'une seule pièce, à l'exception éventuellement du renfort 34, par moulage par injection de préférence, ou par emboutissage ou tout autre procédé de fabrication.

La présente description de l'invention est donnée à titre d'exemple non limitatif.

On comprendra que la plaque 10 peut aussi être conçue et dimensionnée pour permettre une pose en paysage.

## Revendications

1. Plaque (10) de support adaptée pour s'emboîter dans un panneau photovoltaïque et permettre la fixation et l'intégration de ce panneau sur une toiture de bâtiment, comprenant :
- des moyens de chevauchement (12) verticaux étanches,
- des moyens d'emboîtement (14) latéraux étanches,
- des plots de support (36) de la plaque (10) qui sont surélevés,
- un espace vide (40) pour le passage des câbles et l'accès à la charpente de la toiture,
**caractérisée en ce qu'**elle comprend au moins l'une des caractéristiques choisies dans le groupe comprenant :
- une pluralité de rails (46) de guidage qui sont agencés en amont de l'espace vide (40) suivant le sens d'écoulement de l'eau en provenance du faîtage de la toiture, et qui sont agencés globalement en V inversé pour dévier l'écoulement de l'eau sur les côtés latéraux de l'espace vide (40),
- au moins un renfort (34) qui est interposé entre les moyens d'emboîtement (14) latéraux et la toiture et qui est conçu pour empêcher l'écrasement desdits moyens d'emboîtement (14),
- une graduation (20) qui est conçue pour ajuster le chevauchement vertical entre deux plaques (10) juxtaposées.

2. Plaque (10) de support selon la revendication 1, **caractérisée en ce que** chaque rail (46) de guidage forme un bourrelet pour dévier l'écoulement de l'eau sur les côtés latéraux de l'espace vide (40).

3. Plaque (10) de support selon l'une quelconque des revendications précédentes, **caractérisée en ce que** les moyens d'emboîtement (14) présentent une section en creux globalement en U inversé, et le renfort (34) est une pièce rapportée qui est agencée dans le creux délimité par les moyens d'emboîtement (14).

4. Plaque (10) de support selon l'une quelconque des revendications précédentes, **caractérisée en ce qu'**elle comprend un bourrelet (42) disposé de façon à éviter l'écoulement de l'eau en provenance du faîtage de la toiture dans l'espace vide (40).

5. Plaque (10) de support selon la revendication 4, **caractérisée en ce qu'**elle comprend une rainure (44) formée dans ledit bourrelet (42), permettant le passage de câbles entre la plaque (10) et le panneau photovoltaïque.

6. Plaque (10) de support selon l'une quelconque des revendications précédentes, **caractérisée en ce que** chaque zone de perçage (38) est moins surélevée que le plot de support (36) associé pour permettre l'agencement de moyens de fixation.

7. Plaque (10) de support selon l'une quelconque des revendications précédentes, **caractérisée en ce qu'**elle comprend des moyens de rehaussement (50) et de ventilation dudit panneau photovoltaïque.

8. Plaque (10) de support selon l'une quelconque des revendications précédentes, **caractérisée en ce qu'**elle comprend des cales (52) permettant de chasser l'eau en provenance du faîtage de ladite toiture.

9. Ensemble formé par un panneau photovoltaïque et une plaque (10) conforme à l'une quelconque des revendications précédentes emboîtée dans ce panneau photovoltaïque.

## Patentansprüche

1. Tragplatte (10), die ausgeführt ist, um in ein Solarmodul eingepasst zu werden, und um die Befestigung und die Integration dieses Moduls auf einem Gebäudedach zu ermöglichen, umfassend:
- dichte vertikale Überlappungsmittel (12)
- dichte laterale Einpaßmittel (14)
- erhöhten Tragstifte (36) der Platte (10)
- einen freien Raum (40) zum Durchführen von Kabeln und für den Zutritt auf den Dachstuhl des Daches
**dadurch gekennzeichnet, dass** sie umfasst mindestens eine der Eigenschaften ausgewählt aus der Gruppe bestehend aus:
- mehreren Führungsschienen (46), die stromaufwärts des freien Raums (40) in Richtung des Ablaufens des Wassers vom Dachfirst des Daches angeordnet sind, und die in einem allgemein umgekehrten V angeordnet sind, um den Ablauf des Wassers an den Lateralseiten des freien Raums (40) umzulenken.
- mindestens eine Verstärkung (34), die zwischen dem seitlichen Einpaßmittel (14) und dem Dach angeordnet ist, und das dazu ausgelegt ist, ein Zerdrücken der Einpaßmittel (14) zu verhindern,
- eine Skala (20), die dazu bestimmt ist, die vertikale Überlappung zwischen zwei nebeneinander angeordneten Platten (10) einzustellen.

2. Tragplatte gemäß Anspruch 1, **dadurch gekennzeichnet, dass** jede Führungsschiene (46) einen Wulst zur Umlenkung des Ablaufens des Wassers an den Lateralseiten des freien Raums (40) bildet.

3. Tragplatte gemäß einem der vorherigen Ansprüche, **dadurch gekennzeichnet, dass** die Einpaßmittel ein allgemein umgekehrtes U-förmiges Hohlprofil aufweisen und die Verstärkung (34) ein Einsatz ist, der in der durch die Einpaßmittel begrenzten Vertiefung angeordnet ist.

4. Tragplatte gemäß einem der vorherigen Ansprüche, **dadurch gekennzeichnet, dass** sie einen Wulst (42) umfasst, der angeordnet ist, um das Ablaufen des Wassers vom Dachfirst des Daches in den freien Raum (40) zu vermeiden.

5. Tragplatte gemäß Anspruch 4, **dadurch gekennzeichnet, dass** sie eine in dem Wulst (42) ausgebildete Einkerbung (8) aufweist, die die Durchführung von Kabeln zwischen der Platte (10) und dem Solarmodul ermöglicht.

6. Tragplatte gemäß einem der vorherigen Ansprüche, **dadurch gekennzeichnet, dass** jeder Bohrungsbereich (38) weniger angehoben ist als der zugehörige Tragstifte (36), um die Anordnung von Befestigungsmitteln zu ermöglichen.

7. Tragplatte gemäß einem der vorherigen Ansprüche, **dadurch gekennzeichnet, dass** sie Mittel (9) zum Erhöhen und Hinterlüften des Solarmoduls umfasst.

8. Tragplatte gemäß einem der vorherigen Ansprüche, **dadurch gekennzeichnet, dass** sie Keile (52) umfasst, mit denen die oberen Platten verkeilt und das Wasser vom Dachfirst des Daches abgelassen werden können.

9. Einheit, die aus einem Solarmodul und einer Platte gemäß einem der vorherigen Ansprüche gebildet wird, die in dieses Solarmodul eingepasst wird.

## Claims

1. A support plate (10) adapted to fit in a photovoltaic panel and enable fastening and integration of this panel on a building roofing, comprising:
- tight vertical overlapping means (12),
- tight lateral fitting means (14),
- pads (36) for supporting the plate (10) which are raised,
- an empty space (40) intended for the passage of cables and for access to the framework of the roofing,
**characterized in that** it comprises at least any of the features chosen in the group comprising:
- a plurality of guide rails (46) which are arranged upstream of the empty space (40) along the flow direction of the water coming from the ridge of the roofing, and which are generally arranged in an inverted V shape so as to divert the flow of the water on the lateral sides of the empty space (40),
- at least one reinforcement (34) which is interposed between the lateral fitting means (14) and the roofing and which is designed so as to prevent crushing of said fitting means (14),
- a graduation (20) which is designed so as to adjust the vertical overlap between two juxtaposed plates (10).

2. The support plate (10) according to claim 1, **characterized in that** each guide rail (46) forms a bead for diverting the flow of the water on the lateral sides of the empty space (40).

3. The support plate (10) according to any one of the preceding claims, **characterized in that** the fitting means (14) present a hollow section generally formed in an inverted U shape, and the reinforcement (34) is an affixed part which is arranged in the recess delimited by the fitting means (14).

4. The support plate (10) according to any one of the preceding claims, **characterized in that** it comprises a bead (42) disposed so as to avoid the flow of the water coming from the ridge of the roofing in the empty space (40).

5. The support plate (10) according to claim 4, **characterized in that** it comprises a groove (44) formed in said bead (42), enabling the passage of cables between the plate (10) and the photovoltaic panel.

6. The support plate (10) according to any one of the preceding claims, **characterized in that** each drilling area (38) is raised lesser than the associated support pad (36) so as to enable the arrangement of fastening means.

7. The support plate (10) according to any one of the preceding claims, **characterized in that** it comprises means (50) for lifting and ventilating said photovoltaic panel.

8. The support plate (10) according to any one of the preceding claims, **characterized in that** it comprises wedges (52) allowing flushing the water coming from the ridge of said roofing.

9. A set formed by a photovoltaic panel and a plate (10) in accordance with any one of the preceding claims fitted in this photovoltaic panel.
